# EUROPÄISCHE PATENTSCHRIFT

(11) **EP 2 411 272 B1**
(45) Veröffentlichungstag und Bekanntmachung des Hinweises auf die Patenterteilung: **28.08.2013**
(21) Anmeldenummer: 10708169.7
(22) Anmeldetag: 01.03.2010
(51) Int. Cl.: B64D 11/00

(54) **INTEGRATION VON VERSORGUNGSFUNKTIONEN IN EIN STAUFACH**
INTEGRATION OF ELECTRICAL SUPPLY FUNCTIONS INTO AN OVERHEAD STORAGE BIN
INTÉGRATION DE FONCTIONS D'ALIMENTATION DANS UN COMPARTIMENT À BAGAGES

(30) Priorität: 24.03.2009 DE 102009014599; 24.03.2009 US 162800 P
(43) Veröffentlichungstag der Anmeldung: 01.02.2012
(73) Patentinhaber: Airbus Operations GmbH, 21129 Hamburg (DE)
(72) Erfinder: SCHLIWA, Ralf, 21739 Dollern (DE); FREY, Martin, 22147 Hamburg (DE); STOLL, René, 22119 Hamburg (DE); TOLKSDORF, Andreas, 22607 Hamburg (DE); SCHNEIDER, Uwe, 21635 Jork (DE)
(74) Vertreter: Kopf, Korbinian Paul
(86) Internationale Anmeldenummer: PCT/EP2010/052536
(87) Internationale Veröffentlichungsnummer: WO 2010/108757

(56) Entgegenhaltungen:
- EP-A1- 1 803 645
- US-A- 5 347 434
- US-A1- 2007 284 479
- US-A1- 2008 071 398

## Beschreibung

### Verwandte Anmeldungen

Die vorliegende Anmeldung beansprucht die Priorität der deutschen Patentanmeldung 10 2009 014 599.0 eingereicht am 24. März 2009 und der US-Provisional Application 61/162,800, eingereicht am 24. März 2009.

### Gebiet der Erfindung

Die Erfindung betrifft die Einrichtung von Transportmittelkabinen. Insbesondere betrifft die Erfindung ein integriertes Modul zum Anbringen in einem Überkopfbereich einer Kabine eines Transportmittels, ein Transportmittel mit einem Modul sowie die Verwendung eines solchen Moduls in einem Flugzeug.

### Technologischer Hintergrund

In Flugzeugkabinen sind die Staufachmodule (Overhead Storage Bins oder auch "Hatracks" genannt) und angrenzende Komponenten und Systeme des Flugzeugs, wie beispielsweise Kabel, Rohre, Schläuche, etc., meist eigenständig und getrennt voneinander an der Innenraumstruktur (im Folgenden auch tragende Struktur genannt) des Flugzeugs befestigt.

Dadurch ist es notwendig, die unterschiedlichen Komponenten nacheinander innerhalb des Flugzeugrumpfes bzw. Flugzeuginnenraums einzubauen. Somit entstehen lange Montagezeiten und dadurch hohe Kosten bei der Fertigung oder beim Umbau des Flugzeugs.

Die DE 10 2007 030 331 A1 und WO 2009/003945 A1 beschreiben Staufachmodule für einen Innenraum eines Flugzeugs, welche einen sog. Passagier-Servicekanal-Bereich (PSC-Bereich) aufweisen, der in fester Weise mit dem Gehäuse des Staufachs verbunden ist.

Nach der Installation des Staufachs in das Flugzeug werden die Komponenten des Versorgungskanals eingebaut und an die Flugzeugversorgung angeschlossen.

EP 1 803 645 A1 beschreibt ein Modul für eine Luftfahrzeugkabine, welches an einem in der Kabine angeordneten Bügel an seiner rechten und linken Seite befestigt wird und welches eine funktionales Werkzeug, beispielsweise in Form einer Beleuchtung, aufweist.

### Zusammenfassung der Erfindung

Es ist eine Aufgabe der Erfindung, die Konfiguration und Ausrüstung einer Kabine eines Transportmittels zu vereinfachen.

Gemäß einem Ausführungsbeispiel der Erfindung ist ein integriertes Modul nach Anspruch 1 zum Anbringen in einem Überkopfbereich in einer Kabine eines Transportmittels angegeben

Es handelt sich um ein "integriertes" Modul, welches die erforderlichen Systemkomponenten zur Versorgung und sonstigen Verwendung durch die Passagiere bereits vor der Installation im Kabinenbereich enthält. Diese Systemkomponenten sind in dem Modul integriert. Weiterhin sind entsprechende Schnittstellen vorgesehen, über welche die Systemkomponenten an die entsprechenden Versorgungsleitungen des Transportmittels angeschlossen werden können.

Insbesondere ist keine nachträgliche Ausrüstung des Moduls mit Systemkomponenten, Leitungen, Schnittstellen, etc. notwendig, nachdem das Modul in der Kabine befestigt ist. Es müssen keine zusätzlichen Systemkomponenten zur Versorgung der Passagiere in der Kabine vorgesehen sein. Alle notwendigen Komponenten sind in dem Modul installiert.

Es handelt sich also um ein autonomes Hatrack, das bereits vor der Installation in der Kabine getestet werden kann, so dass der tatsächliche Installationsaufwand minimiert wird. Insbesondere können die einzelnen Module individuell ausgestattet und konfiguriert werden, je nach gewünschtem Kabinenlayout. Die Schnittstellen innerhalb der Kabine müssen hierfür nicht geändert werden. Es können in der Kabine universelle Standardschnittstellen vorgesehen sein, welche sämtliche erforderlichen Systemanschlüsse aufweisen. Je nach gewünschter Kabinenkonfiguration kann nun das eine oder das andere Modul angeschlossen werden. Da sich somit der Installationsaufwand von der Flugzeugkabine zum Modulhersteller verlagert, kann bei der Kabinenkonfiguration Arbeitsaufwand eingespart werden. Weiterhin wird Gewicht gespart, da in der Kabine keine redundanten Systemanschlüsse vorgesehen sein müssen, um unterschiedliche Kabinenlayouts zu ermöglichen.

Auf diese Weise kann Gewicht eingespart werden.

Gemäß einem weiteren Ausführungsbeispiel der Erfindung weist das Modul zusätzliche Systemkomponenten zur Verwendung durch den Passagier und/oder zur Versorgung des Passagiers auf. Das Modul weist bereits vor seiner Installation in der Kabine sämtliche von den Passagieren benötigte Systemkomponenten und die entsprechenden Schnittstellen zum Anschluss der Systemkomponenten an die Versorgungsleitungen des Transportmittels auf.

Gemäß einem weiteren Ausführungsbeispiel der Erfindung handelt es sich bei den Systemkomponenten um Komponenten, die aus der folgenden Gruppe ausgewählt sind: Kabinenbeleuchtung, Luftauslass, Leselampe und Display.

Gemäß einem weiteren Ausführungsbeispiel der Erfindung ist das Display in einem Display-Kanal angeordnet und als Displaystreifen ausgeführt, der sich über die gesamte Länge des Moduls erstreckt.

Auf diese Weise ist es möglich, dass die unterschiedlichen Module an verschiedenen Positionen in Längsrichtung der Kabine eingebaut werden können oder aber auch die Sitzplatzkonfiguration verändert werden kann und trotzdem jeder Sitz optimal mit Informationen versorgt werden kann. Dies wird dadurch ermöglicht, dass Informationen an verschiedenen Orten des Displaystreifens angezeigt werden können, je nach Ansteuerung (beispielsweise durch eine bordinterne, zentrale Recheneinheit).

Gemäß einem weiteren Ausführungsbeispiel der Erfindung weist der Display-Kanal weiterhin ein Element ausgewählt aus der Gruppe bestehend aus berührungssensitiver Folie, Schwimmwestenkanal und Sauerstoffkanal auf.

Gemäß einem weiteren Ausführungsbeispiel der Erfindung ist das Display als OLED-Streifen (also als streifenförmige organische Leuchtdiode) ausgeführt. Die auf dem OLED-Streifen angezeigten Zeichen werden automatisch an einer geeigneten Stelle angezeigt, abhängig beispielsweise von der Installationsposition des entsprechenden Moduls und/oder einer dazu relativen Position eines darunter angeordneten Passagiersitzes.

Beispielsweise kann die Recheneinheit der Transportmittel automatisch erkennen, wo sich welches Modul befindet (wo es also angeschlossen worden ist). Weiterhin kann die Recheneinheit in Erfahrung bringen, wo sich welche Sitzreihe befindet, so dass die Sitzplatzinformation und/oder andere Informationen jeweils an den richtigen Stellen angezeigt werden.

Dies alles kann vollautomatisch erfolgen, ohne dass ein Benutzereingriff erforderlich ist.

Gemäß einem weiteren Ausführungsbeispiel der Erfindung weist das Modul einen Individualkanal zur Versorgung des Passagiers auf. Der Individualkanal umfasst Luftdüsen und dient dem Ersatz einer herkömmlichen PSU.

Gemäß einem weiteren Ausführungsbeispiel der Erfindung weist das Modul einen oberen Befestigungsbereich mit einem oder mehreren oberen Befestigungselementen zur Befestigung des Moduls an einem oder mehreren oberen Befestigungspunkten (beispielsweise einer Befestigungsschiene) des Transportmittels auf. Weiterhin ist mindestens ein unteres Befestigungselement vorgesehen, das der Befestigung des Moduls an einem unteren Befestigungspunkt oder einer unteren Befestigungsschiene des Transportmittels dient.

Beispielsweise können die oberen Befestigungselemente in die oberen Befestigungspunkte eingehängt werden und das Modul dann an den oberen Aufhängungspunkten in die Montageposition verschwenkt werden, bis die unteren Befestigungselemente an den unteren Befestigungspunkten einrasten.

Gemäß einem weiteren Ausführungsbeispiel der Erfindung ist die Schnittstelle zum automatischen Anschluss der Systemkomponente an die Versorgungsleitung des Transportmittels ausgeführt, wenn das Modul an den Befestigungspunkten befestigt wird. In anderen Worten erfolgt der Anschluss der Systemkomponenten an die Versorgungsleitungen des Transportmittels automatisch während dem Anbringen des Moduls an den Befestigungspunkten. Beispielsweise handelt es sich bei den Schnittstellen um eine Art Steckverbindungen, die zusammengesteckt werden, wenn das Modul in die Montageposition verschwenkt wird.

Hierdurch lässt sich der Installationsaufwand stark reduzieren.

Gemäß einem weiteren Ausführungsbeispiel der Erfindung weist das Modul eine Schnittstelle zum Anschluss zumindest einer der Systemkomponenten an einen Datenbus bzw. ein Datenbussystem des Transportmittels auf. Hierdurch kann eine automatische Adressierung des Moduls nach dessen Installation in der Kabine ermöglicht werden.

Auf diese Weise stellt die Recheneinheit des Transportmittels fest, wo sich welches Modul befindet und kann dann die entsprechenden Module geeignet ansteuern.

Gemäß einem weiteren Ausführungsbeispiel der Erfindung ist ein Transportmittel mit einem oben und im Folgenden beschriebenen Modul vorgesehen.

Gemäß einem weiteren Ausführungsbeispiel der Erfindung weist das Transportmittel eine Rechen- und Steuereinheit zur Steuerung der einzelnen Systemkomponenten auf.
Insbesondere dient die Rechen- und Steuereinheit auch der Erkennung der Anschlusspositionen der einzelnen Module relativ zu den Sitzen in der Kabine.

Gemäß einem weiteren Ausführungsbeispiel der Erfindung handelt es sich bei dem Transportmittels um ein Luftfahrzeug, wie Helikopter, Zeppelin oder Flugzeug. Auch kann es sich um ein Schienenfahrzeug, ein Wasserfahrzeug oder ein Landfahrzeug handeln.

Gemäß einem weiteren Ausführungsbeispiel der Erfindung ist das Transportmittel zur Einstellung einer Position von anzuzeigenden Zeichen auf dem Display abhängig von der Position des Moduls in der Kabine ausgeführt.

Gemäß einem weiteren Ausführungsbeispiel der Erfindung ist die Verwendung eines oben und im Folgenden beschriebenen Moduls in einem Flugzeug angegeben.

Die hier und im Folgenden beschriebenen Ausführungsbeispiele betreffen gleichermaßen das Modul, das Transportmittel und die Verwendung. In anderen Worten lassen sich die im Folgenden beispielsweise im Hinblick auf das Modul beschriebenen Merkmale auch in dem Transportmittel implementieren, und umgekehrt.

Im Folgenden werden mit Verweis auf die Figuren Ausführungsbeispiele der Erfindung beschrieben.

### Kurze Beschreibung der Figuren

Fig. 1 zeigt mehrere Darstellungen eines Moduls und dessen Komponenten gemäß Ausführungsbeispielen der Erfindung.
Fig. 2 zeigt ein Modul gemäß einem Ausführungsbeispiel der Erfindung, das an einer tragenden Struktur eines Luftfahrzeugs befestigt ist.
Fig. 3 zeigt ein Modul gemäß einem weiteren Ausführungsbeispiel der Erfindung, das ebenfalls an einer tragenden Struktur eines Luftfahrzeugs befestigt ist.
Fig. 4 zeigt ein weiteres Modul sowie dessen Befestigungsposition gemäß einem weiteren Ausführungsbeispiel der Erfindung.
Fig. 5 zeigt ein weiteres Modul gemäß einem weiteren Ausführungsbeispiel der Erfindung.
Fig. 6 zeigt einen Bereich einer Flugzeugkabine gemäß einem Ausführungsbeispiel der Erfindung.
Fig. 7 zeigt einen weiteren Bereich einer Flugzeugkabine gemäß einem Ausführungsbeispiel der Erfindung.
Fig. 8 zeigt einen weiteren Bereich einer Flugzeugkabine gemäß einem Ausführungsbeispiel der Erfindung.
Fig. 9 zeigt ein Modulsystem gemäß einem Ausführungsbeispiel der Erfindung.
Fig. 10 zeigt ein Luftfahrzeug gemäß einem Ausführungsbeispiel der Erfindung.

### Detaillierte Beschreibung von Ausführungsbeispielen

Die Darstellungen in den Figuren sind schematisch und nicht maßstäblich.

In der folgenden Figurenbeschreibung werden für die gleichen oder ähnlichen Elemente die gleichen Bezugsziffern verwendet.

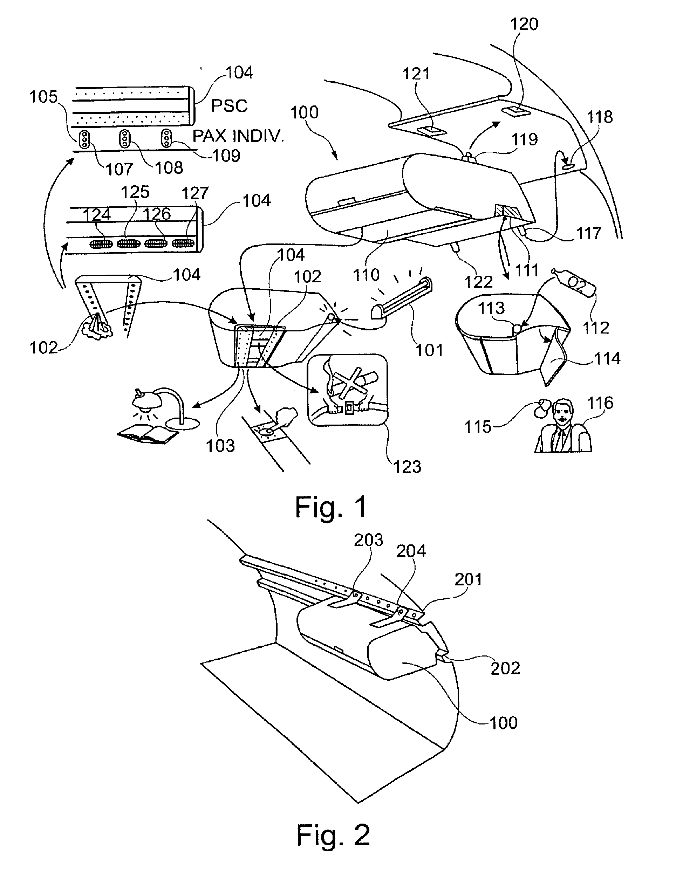

Fig. 1 zeigt ein integriertes Modul 100, darin integrierte Systemkomponenten sowie einen Teil einer Transportmittelkabine.

Das integrierte Modul 100 weist insbesondere eine Kabinenbeleuchtung 101, beispielsweise in Form einer Leuchtstoffröhre, Luftauslässe 102, Leselampen 103, die sich in einem Leselampenkanal befinden, sowie einen Displaykanal 104 mit zusätzlichen Funktionen auf. Der Display-Kanal 104 weist beispielsweise einen Displaystreifen, z. B. in Form einer OLED, auf. Auch kann er eine sog. berührungssensitive Folie (Touchfolie), einen Schwimmwestenkanal sowie einen Sauerstoffkanal aufweisen. Der Sauerstoffkanal ist beispielsweise als autonomer Sauerstoffkanal ausgeführt.

Weiterhin ist ein sog. Pax Indivkanal 105 vorgesehen, also ein individueller Passagierkanal. Der Pax Indivkanal 105 weist beispielsweise ein Schlitzrohr, eine verschiebbare Blende, angesteuerte Bimetalle und/oder eine überbestimmte Anzahl an Luftdüsen auf (also mehr Luftdüsen, als eigentlich erforderlich sind). Auf diese Weise kann bei der Verschiebung von Sitzreihen gewährleistet werden, dass jeder Passagier stets optimal versorgt wird.

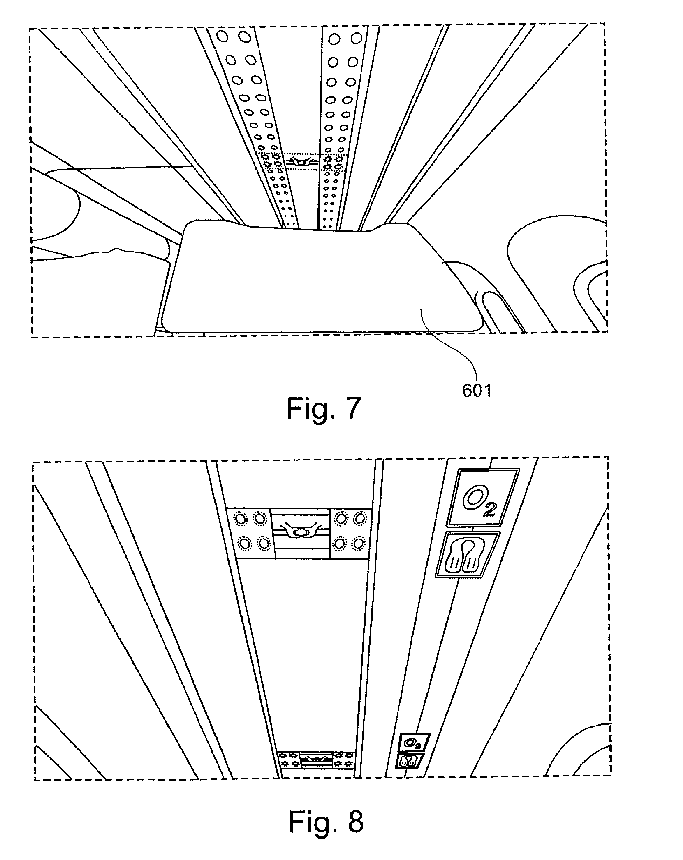

Weiterhin ist ein herkömmlicher PSU-Kanal als Sonderlösung adaptierbar (siehe hierzu auch Fig. 8).

In der Unterseite des Moduls 100 ist ein streifenförmiges Element 110 integriert, welches den Display-Kanal (beispielsweise in der Mitte) und links bzw. rechts daneben den Leselampenkanal 103 und einen Luftdüsenkanal mit einer Vielzahl an Luftdüsen 102 aufweist.

Insbesondere können in diesem Element 100 berührungsempfindliche Sensoren vorgesehen sein, über welche beispielsweise die Lichtfunktionen und/oder Luftdüsenfunktionen gesteuert werden können.

Weiterhin ist der Display-Kanal 104 derart ausgeführt, dass er bestimmte Zeichen 123, wie beispielsweise das Anschnallzeichen, das Rauchverbotszeichen oder andere Informations- bzw. Warnhinweise, anzeigen kann.

Der Streifen 104 kann verschiedenartig ausgeführt sein. Insbesondere können verschiedene Elemente in diesem Streifen wahlweise kombiniert sein. Insbesondere können verschiedene Luftdüsenanordnungen 107, 108, 109 und/oder verschiedene Leseleuchtenanordnungen 124, 125, 126, 127 vorgesehen sein.

Der Streifen 110 wird werkseitig in das integrierte Modul 100 bei dessen Konfektionierung integriert, so dass das Modul bereits vor der Installation in der Transportmittelkabine nach den individuellen Benutzerwünschen ausgerüstet ist. Es sind Standardschnittstellen innerhalb des Moduls vorgesehen, die es ermöglichen, dass unterschiedliche Streifen 110 bedarfsweise in dem Modul integriert werden, je nach Kundenwunsch.

Das Modul 100 weist weiterhin mehrere Befestigungselemente (beispielsweise oberes Befestigungselement 119 und untere Befestigungselemente 117, 123) auf, mit deren Hilfe das Modul an der tragenden Struktur der Transportmittelkabine befestigt werden kann.

Für die obere Befestigung sind an der tragenden Struktur der Kabine die Befestigungspunkte 121, 120 vorgesehen, in welche die oberen Befestigungselemente 119 eingeklickt oder eingehängt werden können. Weiterhin sind untere Befestigungspunkte 118 vorgesehen, welche beispielsweise durch ein Schwenken des Moduls um die oberen Befestigungspunkte 120, 121 mit den unteren Befestigungspunkten 117, 122 verbunden werden können. Auch ist es möglich, dass das Modul zuerst mit seinen unteren Befestigungsnasen 117, 122 in die unteren Befestigungspunkte 118 eingehängt wird und dann nach oben geschwenkt wird, so dass die Befestigungselemente 119 in die entsprechenden Gegenelemente 120, 121 einschnappen (sog. Snap and Click Verbindung).

Weiterhin ist ein Notversorgungskanal 111 vorgesehen, der eine nach unten öffnende Klappe 114 aufweist. Über dem Kanal befindet sich am Ort 113 eine Sauerstoffversorgung, beispielsweise in Form einer Druckgasflasche 112. An diese Sauerstoffversorgung ist eine Atemmaske 115 angeschlossen, die bei Öffnen der Klappe 114 dem Passagier entgegenfällt. Ebenso weist dieser Notfallkanal 111 auch ein oder mehrere Schwimmwesten 116 auf, die dem Passagier ebenfalls entgegenfallen, wenn die Klappe 114 öffnet.

Fig. 2 zeigt ein integriertes Modul 100, welches an der tragenden Struktur 201, 202 der Kabine befestigt ist. Es sind die oberen Befestigungselemente 203, 204 zu sehen, die in die obere Schiene 201 eingehängt werden. Die obere Schiene ist eine durchlaufende Schiene zum Einhängen und zur Sicherstellung der Maßhaltigkeit.

Der untere Bereich des Moduls 100 liegt auf der unteren Schiene 202 auf und ist ggf. über eine Snap and Click Verbindung daran befestigt.

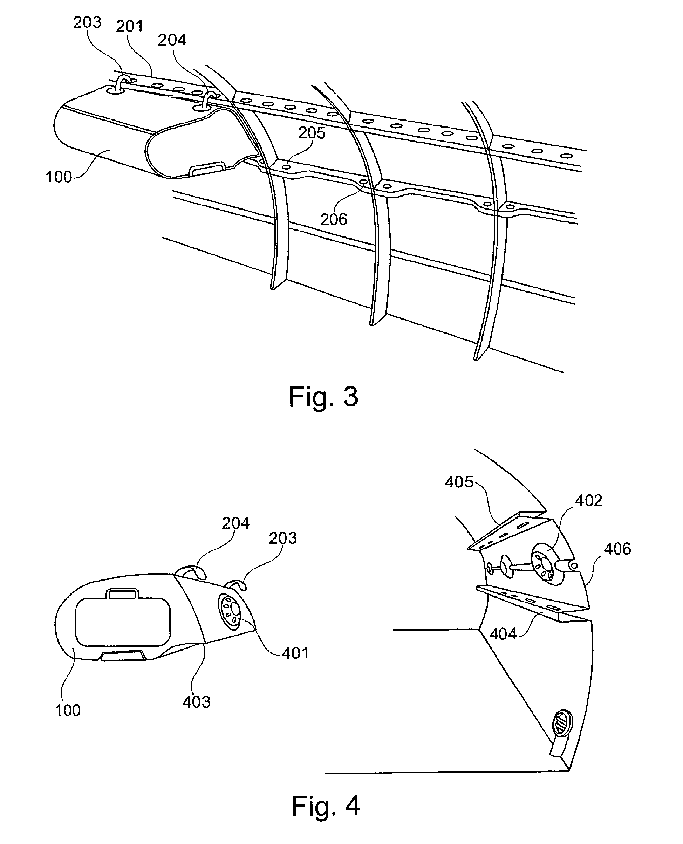

Fig. 3 zeigt ein Modul 100 gemäß einem weiteren Ausführungsbeispiel der Erfindung. Das Modul 100 weist hakenförmige obere Befestigungselemente 203, 204 auf, die in entsprechende Löcher bzw. ovale Aussparungen in einer Befestigungsschiene 201 eingehängt werden. Auch sind die entsprechenden Aussparungen 205, 206 an den unteren Befestigungsschienen zu sehen, in welche die unteren Befestigungselemente des Moduls 100 eingehängt oder eingerastet werden.

Natürlich kann das Modul auch auf andere Weise an der Flugzeugkabinenstruktur befestigt werden.

Fig. 4 zeigt ein Modul 100, das ebenfalls zwei hakenförmige obere Befestigungselemente 203, 204 aufweist. Die hintere Unterkante 403 des Moduls sitzt nach dem Anklappen des Moduls and die Kabinenwand 406 auf dem unteren Träger 404 auf. Der Installationsvorgang erfolgt derart, dass zuerst die beiden Haken 203, 204 in die entsprechenden Aussparungen im oberen Träger 405 eingehängt werden. Daraufhin wird das Modul verschwenkt, so dass die Schnittstelle 401 des Moduls in die entsprechende Gegenschnittstelle 402 der Kabinenwand eingeführt wird. Auf diese Weise erfolgt ein automatisches Anschließen der Systemkomponenten des Moduls an die Versorgung des Transportmittels.

Die Schienen 405 oder 404 können als Stromrückführungen dienen, insbesondere bei einer CFK-Ausführung des Rumpfes. Die untere Befestigung des Moduls 100 kann spantbezogen, also im Bereich der Spante erfolgen.

Die Verbindung der elektrischen Kontakte (also der elektrische Anschluss) der elektrischen Verbraucher des Moduls an die Flugzeugversorgung erfolgt automatisch bei Installation des Moduls an der tragenden Struktur. Optimaler Weise ist hierfür kein eigener Arbeitsschritt erforderlich.

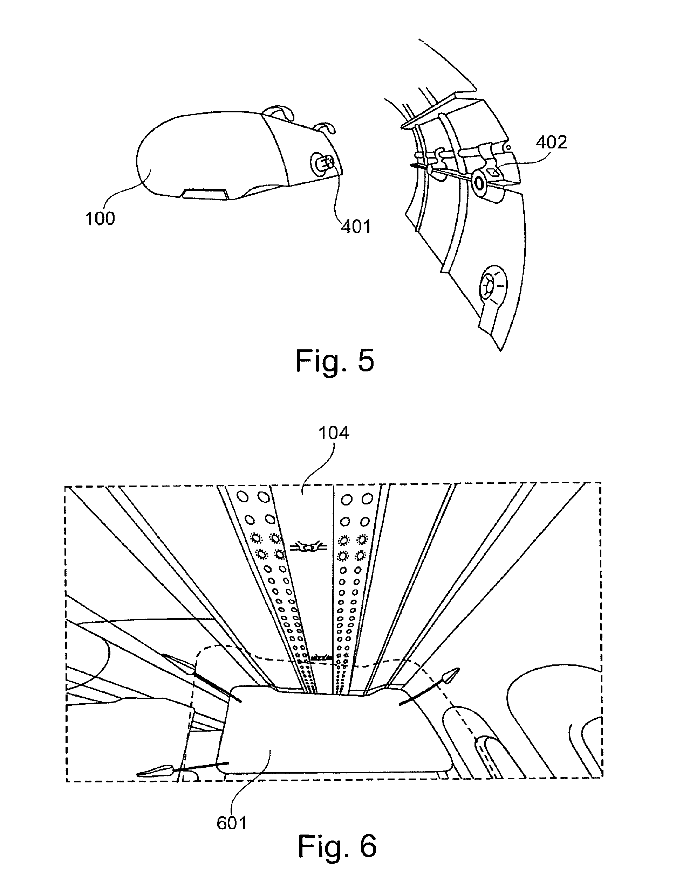

Fig. 5 zeigt ein Modul 100 mit einem etwas anders ausgestalteten Schnittstellenanschluss 401, der bei Anklappen des Moduls an die Flugzeugwand in den entsprechenden Gegenschnittstellenanschluss 402 der Flugzeugversorgung eingeführt wird.

Fig. 6 zeigt eine Trennwand 601 einer Flugzeugkabine, die je nach Dimensionierung der unterschiedlichen Klassen (Economy/Business, 1. Klasse) in Flugzeuglängsrichtung verschoben werden kann. Wie in Fig. 6 zu sehen, kann die Displayeinrichtung 104 flexibel auf die sich ändernden Sitzplatzkonfigurationen reagieren, da die unterschiedlichen Beleuchtungselemente eine verhältnismäßig enge Rasterung aufweisen.

Fig. 7 zeigt denselben Kabinenausschnitt wie Fig. 6, bei dem allerdings die Wand 601 weiter nach vorne geschoben ist.

Wie in Fig. 8 zu sehen, kann auch ein herkömmlicher PSU-Kanal in das Modul 100 integriert werden.

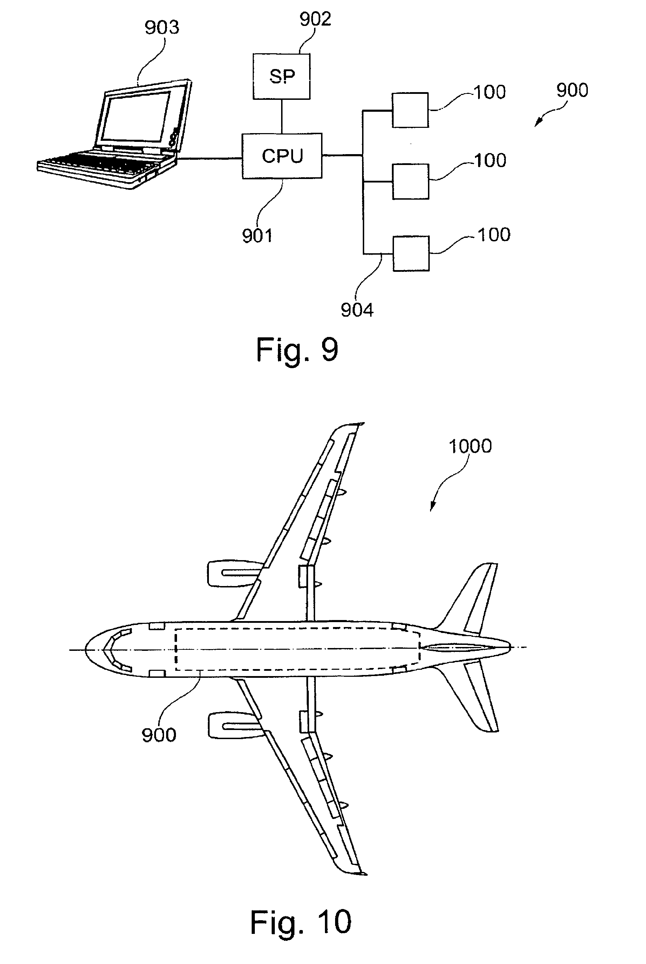

Fig. 9 zeigt ein Modulsystem 900, das in ein Transportmittel eingebaut werden kann, beispielsweise in ein Luftfahrzeug.

Das Modulsystem 900 weist eine zentrale Rechen- und Steuereinheit 901 mit einem daran angeschlossenen Speicher 902 auf. Weiterhin ist eine Eingabe/Ausgabeeinheit 903 vorgesehen, über welche die Rechen- und Steuereinheit 901 gesteuert und programmiert werden kann.

Die Rechen- und Steuereinheit 901 ist an ein Bussystem 904 angeschlossen, an welches die verschiedenen Module 100 angeschlossen sind. Allein durch die Installation der Module 100 erkennt die Rechen- und Steuereinheit 901, an welcher Position im Flugzeug sich jedes einzelne Modul befindet. Weiterhin erkennt die Rechen- und Steuereinheit, wo sich die Passagiersitze befinden, so dass die Module jeweils geeignet angesteuert werden können.

Insbesondere ist eine automatische Adressierung der Module möglich. Weiterhin ist es möglich, beispielsweise die Leselampen individuell anzusteuern und die Lichtzeichen mit verschobenen Sitzen mitwandern zu lassen. Dies alles erfolgt programmgesteuert.

Die Schnittstelle 401 kann eine kombinierte Schnittstelle sein, welche sowohl die Verbindung zur Sauerstoffversorgung, zur Klimaanlage und zur elektrischen Versorgung des Luftfahrzeugs ermöglicht.

Insbesondere ist eine Ansteuerung der Sauerstoffanlage, eine Ansteuerung der Schwimmwestenabdeckung und eine automatische Verbindung zur Klimaanlage bei Installation des Moduls gewährleistet.

Das integrierte Modul kann bereits vollständig und vorgeprüft in dafür vorgesehene Aufnahmeeinrichtungen an der Kabinendecke eingerastet werden. Beispielsweise können diese Aufnahmeeinrichtungen Schnittstellen aufweisen, die PSU-Funktionalitäten in dem Überkopfmodul zur Verfügung stellen.

Weiterhin können die Module Display-Kanäle aufweisen, die sich über die gesamte Länge der Kabine, beispielsweise in Form von OLED-Streifen, erstrecken. Diese Display-Kanäle sind somit in der Lage, praktisch an jeder Längsposition der Flugzeugkabine Anzeigen bereitzustellen. Durch eine Software werden individuelle Anzeigen generiert, die an die aktuellen Sitzpositionen angepasst sind. Es kann dadurch eine manuelle Anpassung zumindest der Anzeigeeinheiten vermieden werden, da alles automatisch über eine Software realisiert werden kann.

Fig. 10 zeigt ein Luftfahrzeug 1000 mit einem oben beschriebenen Modulsystem 900, welches mehrere der oben beschriebenen Module sowie eine zentrale Rechen- und Steuereinheit aufweist.

Ergänzend sei darauf hingewiesen, dass "umfassend" und "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

## Patentansprüche

1. Integriertes Modul (100) zum Anbringen in einem Überkopfbereich in einer Kabine eines Transportmittels, zur Aufnahme von Gepäckstücken und zur Bereitstellung von PSU-Funktionalität, das Modul (100) aufweisend:
eine Systemkomponente (102) zur Versorgung eines Passagiers;
eine Schnittstelle (401) zum Anschluss der Systemkomponente (102) an eine Versorgungsleitung des Transportmittels;
**dadurch gekennzeichnet, dass** das Modul (100) aufweist:
ein oberes Befestigungselement (119, 203, 204) zur Befestigung des Moduls (100) an einem oberen Befestigungspunkt (201) des Transportmittels;
ein unteres Befestigungselement (117, 122) zur Befestigung des Moduls (100) an einem unteren Befestigungspunkt (202) des Transportmittels;
wobei die Schnittstelle (401) zum automatischen Anschluss der Systemkomponente (102) an die Versorgungsleitung des Transportmittels ausgeführt ist, wenn das Modul (100) an den Befestigungspunkten (201, 202) befestigt wird.

2. Modul (100) nach Anspruch 1, weiterhin aufweisend:
zusätzliche Systemkomponenten (103, 104) zur Verwendung durch den Passagier;
wobei das Modul (100) bereits vor seiner Installation in der Kabine sämtliche Systemkomponenten (102, 103, 104) und Schnittstellen (401) zum Anschluss der Systemkomponenten an entsprechende Versorgungsleitungen des Transportmittels aufweist.

3. Modul (100) nach einem der vorhergehenden Ansprüche,
wobei das Modul (100) als Systemkomponenten zumindest eine Komponente ausgewählt aus der Gruppe bestehend aus Kabinenbeleuchtung (101), Luftauslass (102), Leselampe (103), und Display (123) aufweist.

4. Modul (100) nach Anspruch 3,
wobei das Display (123) in einem Displaykanal (104) angeordnet ist und als Displaystreifen ausgeführt ist, der sich über die gesamte Länge des Moduls (100) erstreckt.

5. Modul (100) nach Anspruch 4,
wobei der Displaykanal (104) weiterhin ein Element ausgewählt aus der Gruppe bestehen aus berührungssensitive Folie, Schwimmwestenkanal, und Sauerstoffkanal aufweist.

6. Modul (100) nach Anspruch 4 oder 5,
wobei das Display (123) als OLED-Streifen ausgeführt ist; und
wobei auf dem OLED-Streifen angezeigte Zeichen automatisch an einer geeigneten Stelle angezeigt werden, abhängig von der Installationsposition des Moduls (100) und einer dazu relativen Position eines darunter angeordneten Passagiersitzes.

7. Modul (100) nach einem der vorhergehenden Ansprüche, weiterhin aufweisend:
einen Individualkanal zur Versorgung des Passagiers, der Luftdüsen aufweist und zum Ersatz einer PSU ausgerührt ist.

8. Modul (100) nach einem der vorhergehenden Ansprüche, weiterhin aufweisend:
eine Schnittstelle (401) zum Anschluss zumindest einer der Systemkomponenten an ein Datenbussystem (904) des Transportmittels zur automatischen Adressierung des Moduls (100) nach dessen Installation in der Kabine.

9. Modulsystem (900), aufweisend:
mehrere Module (100) nach einem der Ansprüche 1 bis 8;
eine zentrale Rechen- und Steuereinheit (901) zur Steuerung der einzelnen Systemkomponenten der Module (100).

10. Transportmittel mit einem Modul (100) nach einem der Ansprüche 1 bis 8.

11. Transportmittel nach Anspruch 10, weiterhin aufweisend:
eine Rechen- und Steuereinheit (901) zur Steuerung der einzelnen Systemkomponenten.

12. Transportmittel nach Anspruch 11, ausgeführt als Flugzeug;
wobei die Rechen- und Steuereinheit (901) allein durch eine Installation des Moduls (100) erkennt, an welcher Position im Flugzeug sich das Modul befindet; und
wobei das Flugzeug ausgeführt ist zur Einstellung einer Position von anzuzeigenden Zeichen auf dem Display (123) abhängig von der Position des Moduls (100) in der Kabine.

13. Verwendung eines Moduls (100) nach einem der Ansprüche 1 bis 8 in einem Flugzeug.

## Claims

1. An integrated module (100) for mounting in an overhead area in a cabin in a means of transportation, for holding luggage items and providing PSU functionality, the module (100) comprising:
a system component (102) to supply a passenger;
an interface (401) to connect the system component (102) to a supply line of the means of transportation;
**characterized in that** the module (100) comprises:
an upper attachment element (119, 203, 204) to secure the module (100) to an upper attachment point (201) of the transport;
a lower attachment element (117, 122) to secure the module (100) to a lower attachment point (202) of the transport;
wherein the interface (401) is adapted for automatically connecting the system component (102) to the supply line of the means of transportation when the module (100) is secured to the attachment points (201, 202).

2. The module (100) according to claim 1, further comprising:
additional system components (103, 104) for use by the passenger;
wherein the module (100) has system components (102, 103, 104) and interfaces (401) for connecting the system components to corresponding supply lines in the means of transportation before the module's installation in the cabin.

3. The module (100) according to any of the preceding claims,
wherein the module (100) comprises as system components a component selected from the group consisting of a cabin light (101), an air outlet (102), a reading lamp (103), and a display (123).

4. The module (100) according to claim 3,
wherein the display (123) is arranged in a display channel (104) and is configured as a display strip, that extends over the entire length of the module (100).

5. The module (100) according to claim 4,
wherein the display channel (104) further comprises an element selected from the group consisting of a touch-sensitive film, a lifejacket channel, and an oxygen channel.

6. The module (100) according to claims 4 or 5,
wherein the display (123) is implemented as an OLED-strip, and
wherein characters displayed on the OLED-strip are automatically displayed at an appropriate position, depending on the installation position of the module (100) and a position relative to a passenger seat arranged underneath.

7. The module (100) according to any of the preceding claims, further comprising:
an individual channel to supply the passenger, comprising air nozzles and configured to replace the PSU.

8. The module (100) according to any of the preceding claims, further comprising:
an interface (401) to connect at least one of the system components to a data bus system (904) of the means of transportation to automatically address the module (100) after installation in the cabin.

9. A module system (900), comprising:
a plurality of modules (100) according to claims 1 to 8;
a processing and control unit (901) configured to control the individual system components of the module (100).

10. A means of transportation with a module (100) according to claims 1 to 8.

11. The means of transportation according to claim 10, further comprising;
a processing and control unit (901) to control the individual system components.

12. The means of transportation according to claim 11, designed as an aircraft,
wherein the processing and control unit (901) recognizes which position in the aircraft the module (100) is in solely through the installation of the module; and
wherein the aircraft is configured to adjust a position of characters to be displayed on the display (123) depending on the position of the module (100) in the cabin.

13. The use of a module (100) according to claims 1 to 8 in an aircraft.

## Revendications

1. Module (100) intégré à installer dans une zone de plafond dans une cabine d'un moyen de transport, pour la réception de bagages et pour la mise à disposition de fonctionnalités de bloc d'alimentation, le module (100) présentant :
- un composant de système (102) pour l'alimentation d'un passager ;
- une interface (401) pour le raccordement du composant de système (102) à une ligne d'alimentation du moyen de transport ;
**caractérisé par le fait que** le module (100) présente :
un élément de fixation supérieur (119, 203, 204) pour la fixation du module (100) à un point de fixation supérieur (201) du moyen de transport ;
un élément de fixation inférieur (117, 122) pour la fixation du module (100) à un point de fixation inférieur (202) du moyen de transport ;
l'interface (401) étant réalisée pour le raccordement automatique du composant de système (102) à la ligne d'alimentation du moyen de transport quand le module (100) est fixé aux points de fixation (201, 202).

2. Module (100) selon la revendication 1, présentant en outre :
- des composants de système (103, 104) supplémentaires pour être utilisés par le passager ;
- le module (100) présentant avant son installation dans la cabine tous les composants de système (102, 103, 104) et interfaces (401) pour le raccordement des composants de système à des lignes d'alimentation correspondantes du moyen de transport.

3. Module (100) selon l'une des revendications précédentes, le module (100) présentant en tant que composants de système au moins un composant choisi parmi le groupe constitué d'éclairage de cabine (101), de sortie d'air (102), de lampe de lecture (103) et d'écran d'affichage (123).

4. Module (100) selon la revendication 3, l'écran d'affichage (123) étant disposé dans un canal d'affichage (104) et étant réalisé sous forme de bande d'affichage, qui s'étend sur la longueur totale du module (100).

5. Module (100) selon la revendication 4, le canal d'affichage (104) présentant en outre un élément choisi parmi le groupe constitué de film tactile, de canal de gilets de sauvetage, et de canal à oxygène.

6. Module (100) selon la revendication 4 ou 5,
- l'écran d'affichage (123) étant réalisé sous forme de bande OLED ; et
- des signes affichés sur la bande OLED étant affichés automatiquement à un emplacement adapté, en fonction de la position d'installation du module (100) et par rapport à une position d'un siège de passager disposé en dessous.

7. Module (100) selon l'une des revendications précédentes, présentant en outre :
- un canal individuel pour l'alimentation du passager, qui présente des buses d'air et qui est réalisé pour remplacer un bloc d'alimentation.

8. Module (100) selon l'une des revendications précédentes, présentant en outre :
- une interface (401) pour le raccordement d'au moins un des composants de système à un système de bus de données (904) du moyen de transport pour l'adressage automatique du module (100) après son installation dans la cabine.

9. Système de module (900), présentant :
- plusieurs modules (100) selon l'une des revendications 1 à 8 ;
- une unité de calcul et de commande (901) pour la commande des différents composants de système des modules (100).

10. Moyen de transport avec un module (100) selon l'une des revendications 1 à 8.

11. Moyen de transport selon la revendication 10, présentant en outre :
- une unité de calcul et de commande (901) pour la commande des différents composants de système.

12. Moyen de transport selon la revendication 11, réalisé sous la forme d'aéronef ;
- l'unité de calcul et de commande (901) reconnaissant seule par installation du module (100) à quelle position se trouve le module dans l'aéronef ; et
- l'aéronef étant réalisé pour régler une position de signes à afficher sur l'écran d'affichage (123) en fonction de la position du module (100) dans la cabine.

13. Utilisation d'un module (100) selon l'une des revendications 1 à 8 dans un aéronef.
